**Europäisches Patentamt**

**European Patent Office**

**Office européen des brevets**

(19)

(11) Veröffentlichungsnummer . **0 115 763**
**B1**

(12) **EUROPÄISCHE PATENTSCHRIFT**

(45) Veröffentlichungstag der Patentschrift:
**30.08.89**

(21) Anmeldenummer: **84100020.1**

(22) Anmeldetag: **03.01.84**

(51) Int. Cl.⁴: **B 29 C 67/18, B 29 D 31/00,**
**B 29 C 53/56, F 16 B 7/00**

(54) Verbindungselement für zwei Stäbe mit rundem Querschnitt.

(30) Priorität: **05.01.83 DE 3300194**
**01.09.83 DE 3331505**

(43) Veröffentlichungstag der Anmeldung:
**15.08.84 Patentblatt 84/33**

(45) Bekanntmachung des Hinweises auf die Patenterteilung: **30.08.89 Patentblatt 89/35**

(84) Benannte Vertragsstaaten:
**AT BE CH DE FR GB IT LI NL SE**

(56) Entgegenhaltungen:
**EP--A-- 0 012 167**
**EP--A-- 0 017 010**
**EP--A-- 0 102 393**
**DE--A-- 2 326 705**
**DE--A-- 2 710 275**
**FR--A-- 1 090 693**
**FR--A-- 2 118 947**
**FR--A-- 2 202 547**
**FR--A-- 2 356 048**
**GB--A-- 627 989**
**GB--A-- 1 598 434**
**LU--A-- 55 263**
**NL--A-- 6 515 722**
**US--A-- 2 630 157**
**US--A-- 3 522 122**
**US--A-- 3 592 884**
**US--A-- 3 607 495**
**US--A-- 3 737 261**
**US--A-- 4 136 984**
**US--A-- 4 242 296**
**NASA, TECH BRIEF, NTN 83-0417; US Titelseite, linke Spalte, Zeilen 28-31, mittlere Spalte, Zeilen 14-18**

(73) Patentinhaber: **Deutsche Forschungs- und Versuchsanstalt für Luft- und Raumfahrt e.V.**
**Linder Höhe Postfach 90 60 58**
**D-5000 Köln 90 (DE)**

(72) Erfinder: **Schütze, Rainer, Dipl.-Ing.**
**Am Klei 14A**
**D-3300 Braunschweig (DE)**

(74) Vertreter: **Gralfs, Harro, Dipl.-Ing.**
**Am Bürgerpark 8**
**D-3300 Braunschweig (DE)**

## Beschreibung

Verbindungselement fü zwei Stäbe mit rundem Querschnitt.

Die Erfindung bezieht sich auf ein Verbindungselement für zwei Stäbe nach dem Oberbegriff des Patentanspruches 1.

Ein bekanntes Verbindungselement dieser Art (US-A 4 136 984) besteht aus einem Metallblech, und der im wesentlichen ebene Abschnitt des Verbindungselementes liegt etwa in der Ebene der Achsen der beiden zu verbindenden Stäbe, und die beiden gekrümmten Abschnitte stoßen an ihrem Ende etwa senkrecht auf diese Ebene. Für die Befestigung der Stäbe an dem Verbindungselement sind Schlauchschellen vorgesehen, die durch an die gekrümmten Abschnitte angrenzende Ausschnitte in dem ebenen Abschnitt hindurchgeführt sind. Für Klebeverbindungen ist ein solches Verbindungselement wegen der hierbei auftretenden Schälkräfte bei Zugbeanspruchungen nicht geeignet. Eine Klebeverbindung ist weiter bei Materialien mit unterschiedlichen Wärmeausdehnungskoeffizienten kritisch, insbesondere wenn die Stäbe aus in einer Kunstharzmatrix eingebetteten Fasern bestehen. Darüber hinaus sind Verbindungselemente aus Blech für extremen Leichtbau, für den derartige Stäbe bevorzugt Anwendung finden, zu schwer.

Aufgabe der Erfindung ist es, ein Verbindungselement der genannten Art so auszugestalten, daß es in faserverstärktem Kunstharz herstellbar und schälkraftfrei durch Klebung mit Stäben aus in einer Kunstharzmatrix eingebetteten Fasern verbindbar ist.

Diese Aufgabe wird gemäß der Erfindung gelöst durch die im kennzeichnenden Teil des Patentanspruches 1 herausgestellten Merkmale.

Eine zweckmäßige Ausgestaltung ist Gegenstand des Patentanspruches 2.

Die Erfindung ist in der Zeichnung beispielsweise veranschaulicht und im nachstehenden im einzelnen unter Bezug auf die Zeichnung beschrieben.

Fig. 1 zeigt perspektivisch eine ebene Stoßverbindung zweier Stäbe mit Verbindungselementen gemäß der Erfindung ;

Fig. 2 zeigt perspektivisch eine räumliche Verbindung von drei Stäben ;

Fig. 3 zeigt perspektivisch eine Eckverbindung zweier Stäbe ;

Fig. 4 zeigt in Draufsicht ein Verbindungselement gemäß der Erfindung ;

Fig. 5 zeigt einen Schnitt längs der Linie V-V in Fig. 4 ;

Fig. 6 zeigt einen Schnitt längs der Linie VI-VI in Fig. 4 in vergrößerter Darstellung ;

Fig. 7 zeigt einen Ausschnitt entsprechend dem gestrichelten Kreis E in Fig. 5.

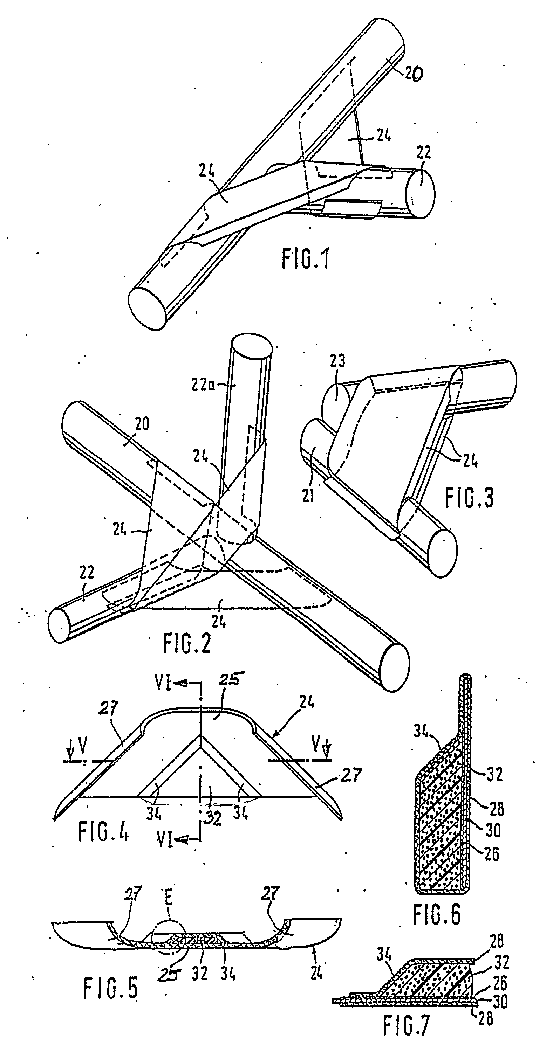

In Fig. 1 ist ein T-Stoß aus zwei Stäben mit rundem Querschnitt dargestellt. Die Stäbe bestehen aus in eine Kunstharzmatrix eingebetteten Fasern. An einen durchlaufenden Stab 20 ist hier senkrecht ein Stab 22 angeschlossen. Der Stab 22 stößt stumpf gegen den Stab 20, wobei es nicht erforderlich ist, daß er mit seiner Stirnfläche gegen den Stab 20 anstößt. Die Verbindung wird durch zwei Verbindungselemente 24 hergestellt, die weiter unten im einzelnen beschrieben sind.

In ähnlicher Weise ist die in Fig. 3 dargestellte Eckverbindung aufgebaut. Der Stab 23 stößt hier seitlich gegen das Ende des Stabes 21. Die Verbindung der beiden Stäbe 21 und 23 erfolgt hier über zwei Verbindungselemente 24. Das zweite Verbindungselement ist hier spiegelbildlich dem ersten Verbindungselement gegenüberliegend angeordnet.

Eine erweiterte Verbindung ist in Fig. 2 dargestellt. Hier ist senkrecht zu dem Stab ein weiterer Stab 22a an den durchgehenden Stab 20 angeschlossen. Die Verbindung ist hier durch drei Verbindungselemente 24 hergestellt.

Einzelheiten der Verbindungselemente 24 sind in Fig. 4 bis 7 dargestellt.

Wie aus Fig. 4 und 5 ersichtlich, ist das Verbindungselement im wesentlichen symmetrisch zu der durch die Schnittlinie VI-VI in Fig. 4 verlaufende Winkelhalbierende des Winkels zwischen den zu verbindenden Stäben ausgebildet. Es weist einen im wesentlichen ebenen Abschnitt 25 auf, der sich bis über die Achsen der zu verbindenden Stäbe erstreckt. Daran schließen sich tangential unterdem jeweiligen Winkel entsprechend dem Umfang der Stäbe gekrümmte Abschnitte 27 mit einem Umschlingungswinkel zwischen 90° und 180° an.

Die in Fig. 6 und 7 dargestellt Ausführungsform des Verbindungselementes weist einen in eine Kunstharzmatrix eingebetteten flachgestreckten Fasergewebeschlauch 28 auf einem blattförmigen Kern 26 auf. Am Kern anliegend ist dabei wenigstens eine Lage aus unidirektionalen Fasern — UD-Gelege 30 — zur Übertragung der Zug- und Druckkräfte angeordnet, gegen die der den Kern und das UD-Gelege umschließende Fasergewebeschlauch 28 anliegt. Durch den blattförmigen Kern 26, der beispielsweise ein steifes Blatt Papier sein kann, ist der Fasergewebeschlauch 28 in seiner Breite gegen Einschnürungen gesichert. Auf der einen Seite des Kerns 26, die der das UD-Gelege tragenden Seite gegenüberliegt, ist auf dem Kern 26 zur Versteifung des Abschnittes 25 eine Kernverstärkung 32 angeordnet, die aus einem Schaumstoff besteht. Wie aus Fig. 4 ersichtlich, hat die Kernverstärkung 32 die Form eines Dreiecks, das mit einer Dreieckseite an einen Längsrand des blattförmigen Kernes 26 angrenzt und an den beiden übrigen Kanten 34 zum blattförmigen Kern 26 hin abgeschrägt ist.

Für die Herstellung der Verbindungselemente können auf einem durchgehenden blattförmigen Kern in entsprechenden Abständen die Kernverstärkungen 32 aufgeklebt sein. Auf der gegenüberliegenden Seite des Kerns wird das UD-Gelege 30 festgelegt. Auf einen derartig vorbereiteten Kernstreifen wird dann der Fasergewebeschlauch 28 aufgezogen, dessen Fasern sich unter einem Winkel zur Schlauchlängserstreckung kreuzen. Aus einem so gebildeten Grundelement werden in Draufsicht trapezförmige Abschnitte ausgeschnitten, wobei die Kernverstärkung 32 jeweils in der Mitte liegt. Diese Rohlinge werden mit Kunstharz getränkt. Sie werden dann in eine Form eingelegt, in der die an die Schrägseiten angrenzenden Bereiche 27 eine Krümmung mit einem Radius entsprechend dem Radius der zu verbindenden Stäbe erhalten. Der Umschlingungswinkel sollte wenigstens 90° betragen, damit eine hinreichende Klebefläche vorhanden ist. Umschlingungswinkel bis 180° sind möglich. Bei kleinerem Bedarf kann die Formgebung auch auf den zu verbindenden Stäben erfolgen.

Nach Auftrag eines entsprechenden Klebers auf die Berührungsflächen wird das Verbindungselement 24 mit den Stäben 20, 22 verklebt. Bei stärker beanspruchten Verbindungen werden zweckmäßig zwei Verbindungselemente vorgesehen, wobei das zweite Verbindungselement 24' dann gegenüberliegend angebracht wird. Durch den beschriebenen Aufbau des Verbindungselementes wird ohne direkte Verbindung zwischen den beiden Stäben eine Stoßverbindung erzielt, die eine hohe Festigkeit aufweist. Die in Längsrichtung verlaufenden Fasern des UD-Geleges sichern die notwendige Zug- und Druckfestigkeit. Über die Kernverstärkung ist die notwendige Knicksteifigkeit des Verbindungselementes erzielbar. Die über die Klebeverbindung übertragenen Kräfte sind überwiegend Scherkräfte.

## Patentansprüche

1. Verbindungselement für eine geklebte Verbindung zwischen zwei unter einem Winkel zueinander liegende Stäbe aus in einer Kunstharzmatrix eingebetteten Fasern (21, 23) mit rundem Querschnitt, das im wesentlichen symmetrisch zur Winkelhalbierenden des Winkels zwischen den Stäben ausgebildet ist, einen im wensentlichen ebenen Abschnitt und daran anschließend entsprechend dem Querschnitt der Stäbe gekrümmte Abschnitte mit einem Umschlingungswinkel zwischen 90° und 180° aufweist, dadurch gekennzeichnet, daß der im wesentlichen ebene Abschnitt (25) sich tangential an die gekrümmten Abschnitte anschließt, und daß das Verbindungselement (24) einen blattförmigen Kern (26), wenigstens eine Lage unidirektionaler Fasern (30) auf wenigstens einer Seite des Kerns und einen Gewebeschlauch (28) mit sich unter einem Winkel zur Schlauchlängserstreckung kreuzenden Fasern aufweist, die in eine Kunstharzmatrix eingebettet sind, wobei der Gewebeschlauch (28) flachgestreckt den Kern (26) und die Lage unidirektionaler Fasern umschließt und sich die unidirektionalen Fasern (30) quer zur Winkelhalbierenden erstrecken.

2. Verbindungselement nach Anspruch 1, dadurch gekennzeichnet, daß der Kern (26) im ebenen Abschnitt auf der Seite mit den gekrümmten Abschnitten (27) eine dreieckförmige Kernverstärkung (32) aus einem Hartschaum trägt, die gleichfalls von dem Gewebeschlauch (28) umschlossen ist.

## Claims

1. A connecting element for an adhered connection between two rods (21, 23) which are located at an angle to each other and are made of fibres embedded in a matrix of synthetic resin, said rods having a round cross section, said connecting element being formed substantially symmetrically to the angle bisectrix of the angle between the rods, and having a substantially flat portion and following on therefrom in accordance with the cross section of the rods having curved portions with a deflection angle of between 90° and 180°, characterised in that the substantially flat portion (25) follows on from the curved portions tangentially and that the connecting element (24) has a plate-shaped core (26), at least one layer of unidirectional fibres (30) on at least one side of the core and a woven tube (28) with fibres which cross at an angle with respect to the longitudinal direction of the tube, said fibres being embeeded in a matrix of synthetic resin, in which the woven tube (28) stretched out flat encircles the core (26) and the layer of unidirectional fibres, and the unidirectional fibres (30) extend transverse to the angle bisectrix.

2. A connecting element according to claim 1, characterised in that in the flat portion at the side with the curved portions (27) the core (26) has a triangular core reinforcement (32) made of hard foam, which is encircled similarly by the woven tube (28).

## Revendications

1. Elément de jonction pour un assemblage collé entre deux barres (21, 23) formant un angle entre elles, barres de section circulaire en fibres enrobées dans une matière synthétique, élément de jonction, qui, symétrique pour l'essentiel par rapport à la bissectrice de l'angle formé par les barres, présente une partie plane pour l'essentiel et, s'y raccordant, des parties recourbées correspondant à la section des barres, avec un angle d'enroulement compris entre 90° et 180°, caractérisé en ce que la partie plane pour l'essentiel (25) se raccorde tangentiellement aux parties recourbées et en ce que l'élément de jonction (24) présente un noyau en forme de feuille (26), une couche, au minimum, en fibres unidirectionnelles (30) sur un côté au moins du noyau et un tuyau souple en tissu (28) comportant des fibres qui s'entrecroisent en formant un angle par rapport au développement longitudinal du tuyau et qui sont enrobées dans une matrice en matière plastique, le tuyau souple en tissu (28) entourant le noyau (26) et la couche en fibres unidirectionnelles, tandis que ces dernières (30) sont transversales par rapport à la bissectrice de l'angle.

2. Elément de jonction selon la revendication 1, caractérisé en ce que le noyau (26) porte un renfort de noyau (32) de forme triangulaire en mousse dure dans la partie plane sur le côté comportant les parties recourbées (27), renfort qui est de la même façon entouré par le tuyau souple (28).

FIG.1

FIG.2

FIG.3

FIG.4

FIG.5

FIG.6

FIG.7